# EUROPÄISCHE PATENTSCHRIFT

(11) **EP 1 498 707 B1**
(45) Veröffentlichungstag und Bekanntmachung des Hinweises auf die Patenterteilung: **11.11.2009**
(21) Anmeldenummer: 04015838.8
(22) Anmeldetag: 06.07.2004
(51) Int. Cl.: G01J 3/04, G01N 21/25

(54) **Schlitzblende in einem Monochromator**
Slit diaphragm in a monochromator
Diaphragme à fente dans un monochromateur

(30) Priorität: 14.07.2003 CH 12302003
(43) Veröffentlichungstag der Anmeldung: 19.01.2005
(73) Patentinhaber: Tecan Trading AG, 8708 Männedorf (CH)
(72) Erfinder: Niggl, Lutz, 83329 Waging (DE); Puchegger, Karl, 2630 Ternitz (AT)
(74) Vertreter: OK pat AG

(56) Entgegenhaltungen:
- EP-A- 0 482 765
- EP-A- 1 496 709
- DE-A- 10 147 481
- GB-A- 2 084 758
- JP-A- 2000 106 649
- US-A- 4 325 634
- US-A- 5 627 671
- US-A- 5 885 531
- US-B1- 6 771 315
- PATENT ABSTRACTS OF JAPAN Bd. 0091, Nr. 63 (P-371), 9. Juli 1985 (1985-07-09) & JP 60 039533 A (NIHON BUNKOU KOGYO KK), 1. März 1985 (1985-03-01)

## Beschreibung

Die Erfindung betrifft gemäss dem Oberbegriff des unabhängigen Anspruchs 1 einen Monochromator mit einer Vorrichtung zum Begrenzen eines mit Licht aus einer Lichtquelle beaufschlagten Feldes. Diese Vorrichtung umfasst eine Blende, die erste und zweite parallel zueinander auf zwei separaten parallelen Linien angeordnete, linear bewegliche Schieber umfasst, welche in Bezug auf eine optische Achse zumindest teilweise symmetrisch zueinander beweglich sind. Jeder der beiden Schieber umfasst zumindest eine optische Öffnung, die zum stufenlosen Verstellen der Blende im Bereich der optischen Achse zumindest teilweise auf der optischen Öffnung des Nachbarschiebers positionierbar ist. Die Vorrichtung umfasst zudem einen Motorantrieb mit einem eine Drehachse aufweisenden Motor, wobei der Motorantrieb zum Bewegen der beiden Schieber in einer Bewegungsrichtung zwei symmetrisch um die Drehachse schwenkbare Bewegungszapfen umfasst, welche in je eine erste mechanische Öffnung in jedem der beiden Schieber eingreifen, und wobei diese Drehachse des Motors rechtwinklig zu dieser Bewegungsrichtung angeordnet ist.

Die Erfindung betrifft zudem Systeme zum Messen der Fluoreszenz und/oder Lumineszenz und/oder Absorption von mit dem Licht aus einer Lichtquelle bestrahlten Proben, wobei das System zumindest einen Monochromator oder ein Spektrometer mit optischen Elementen umfasst.

Solche Systeme sind z.B. als Fluorometer für Standard-Mikroplatten bekannt und weisen folgende optische Anordnung auf: Die Einstrahlungsrichtung ist vertikal und der Detektor befindet auf der gleichen optischen Achse. Dadurch wird eine Probe durchdringendes und/oder von einer Probe ausgelöstes und/oder von einer Probe reflektiertes bzw. gestreutes Licht detektiert. Geräte die durchdringendes Licht detektieren, werden Photometer genannt. Geräte die gestreutes Licht detektieren werden Nephelometer genannt. Fluorometer detektieren nur das von der Probe ausgelöste Licht. Geräte, welche die Absorption einer Substanz bzw. einer Lösung über einen bestimmten Wellenlängenbereich messen, nennt man Spektrometer bzw. Spektrophotometer. Geräte, welche die Fluoreszenz einer Substanz bzw. einer Lösung über einen bestimmten Wellenlängenbereich messen, nennt man z.B. Spektralfluorometer. Messsysteme, welche mehrere dieser Messgeräte vereinen nennt man z.B. Mulitfunktions-Reader.

Üblicherweise weisen Spektrometer Schlitzblenden auf, die zum Auswählen eines bestimmten Wellenlängenbereichs (sogenannte Bandbreite) eine einstellbare bzw. variable Schlitzbreite aufweisen.

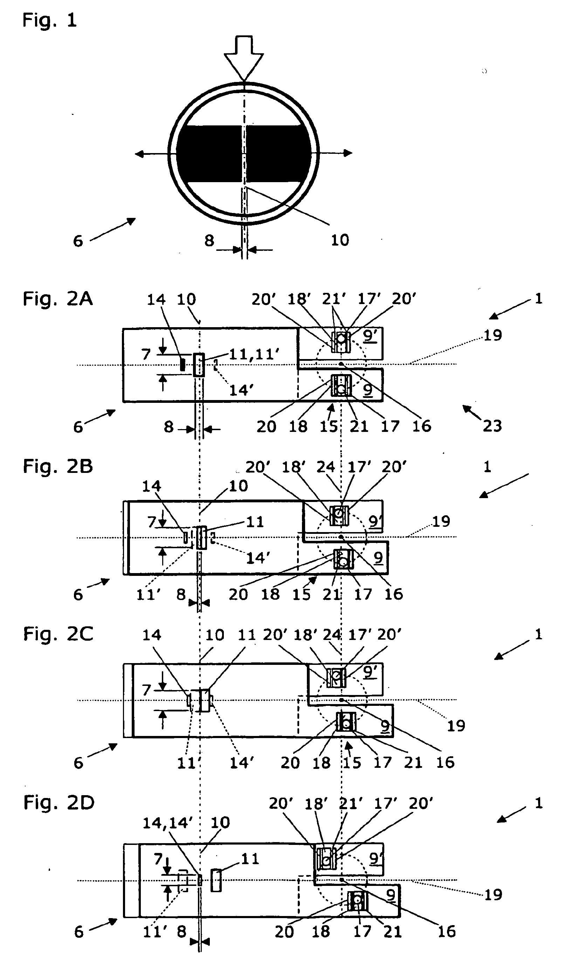

Gemäss einer aus dem Stand der Technik bekannten Lösung (vgl. Fig. 1) wird die Schlitzbreite mittels einer Mikrometerschraube (senkrechter Pfeil) eingestellt, die gezielt einen Ring deformiert (wagrechter Doppelpfeil), an welchem zwei gegen einander gerichtete Keile von einander entfernt (wie dargestellt) oder einander angenähert werden können. Diese bekannte Lösung, bei welcher sich die den Spalt definierenden Schieber in einer Linie befinden, hat den Vorteil, dass sehr kleine Schlitzbreiten extrem genau eingestellt werden können. Sie hat aber den Nachteil, dass ein teurer und komplizierter Mechanismus zum Verändern der Schlitzbreite vorgesehen werden muss.

Eine weitere Lösung aus dem Stand der Technik umfasst das Einsetzen bzw. Wechseln von festen Blenden mit definierten Schlitzbreiten und/oder Schlitzhöhen. Diese Lösung ist ebenfalls teuer und erlaubt keine stufenlose Verstellung der Schlitzbreite.

Aus GB 2,084,758 ist eine gattungsgemässe Vorrichtung mit zwei Schiebern bekannt. Diese Vorrichtung ist recht kompliziert aufgebaut und dementsprechend teuer in der Herstellung.

Aus JP 2000 106 649 A ist eine Blendenvorrichtung zum stufenlosen Einstellen der Belichtung in einer Videokamera bekannt. Diese Blendenvorrichtung umfasst zwei in Gegenrichtung zu einander bewegliche, eine Blendenöffnung begrenzende Blenden und einen über der Blendenöffnung positionierbaren Neutraldichtefilter zum Eliminieren von Beugungsartefakten in den aufgenommenen Bildern.

Die Aufgabe der Erfindung besteht darin, alternative und wenn möglich einfachere Lösungen zum stufenlosen Verstellen der Schlitzhöhe und/oder der Schlitzbreite von Schlitzblenden vorzuschlagen.

Diese Aufgabe wird durch die Merkmale des unabhängigen Anspruchs 1 gelöst.

Bevorzugte Ausführungsformen und weitere erfinderische Merkmale ergeben sich jeweils aus den abhängigen Ansprüchen.

Vorteile der vorliegenden Erfindung umfassen:
- Es wird ein einfacher Mechanismus vorgeschlagen, der es erlaubt, Systeme zum Messen der Fluoreszenz und/oder Lumineszenz und/oder Absorption von mit dem Licht aus einer Lichtquelle bestrahlten Proben - insbesondere Mulitfunktions-Reader mit mehreren solchen Schlitzblenden - kostengünstiger herzustellen.
- Die Schlitzbreite und/oder Schlitzhöhe kann jederzeit, also auch während dem Bestrahlen einer Probe, praktisch stufenlos verändert werden.
- Die Schlitzbreite kann auch, entsprechend voreingestellten Parametern, automatisch verändert oder an ein bestimmtes Probenverhalten angepasst werden.

Die Erfindung wird nun an Hand von schematischen Zeichnungen, die lediglich beispielhafte Ausführungsformen darstellen und den Umfang der Erfindung nicht einschränken sollen, näher erläutert. Dabei zeigt:
- Fig. 1: eine Frontansicht einer aus dem Stand der Technik bekannten, variablen Schlitzblende mit zwei gemeinsam auf einer Line angeordneten Schiebern;
- Fig. 2: eine Frontansicht einer erfindungsgemässen Schlitzblende einer ersten Ausführungsform, mit zwei auf zwei separaten parallelen Linien angeordneten Schiebern zum Variieren der Spaltbreite oder der Spalthöhe, wobei:
Fig. 2A eine erste Schieberstellung zeigt, bei welcher die beiden Schieber im wesentlichen deckungsgleich zueinander stehen und eine maximale Spaltbreite bei einer ersten Spalthöhe definieren;
Fig. 2B eine zweite Schieberstellung zeigt, bei welcher die beiden Schieber etwas gegen einander verschoben sind, so dass eine mittlere Spaltbreite bei einer ersten Spalthöhe resultiert;
Fig. 2C eine dritte Schieberstellung zeigt, bei welcher die beiden Schieber mehr gegen einander verschoben sind, so dass eine minimale Spaltbreite bei einer ersten Spalthöhe resultiert;
Fig. 2D eine vierte Schieberstellung zeigt, bei welcher die beiden Schieber weiter gegen einander verschoben sind, so dass eine feste Spaltbreite mit einer zweiten, reduzierten Spalthöhe resultiert;
- Fig. 3: eine Frontansicht einer erfindungsgemässen Schlitzblende einer zweiten Ausführungsform, mit zwei auf zwei separaten parallelen Linien angeordneten Schiebern zum Variieren der Spaltbreite und/oder Spalthöhe in einer ersten Schieberstellung, bei welcher die beiden Schieber im wesentlichen deckungsgleich zueinander stehen und eine bestimmte Spaltbreite und eine maximale Spalthöhe definieren;
- Fig. 4: eine Frontansicht einer erfindungsgemässen Schlitzblende einer dritten Ausführungsform, mit zwei auf zwei separaten parallelen Linien angeordneten Schiebern zum Variieren der Spaltbreite oder der Spalthöhe in einer ersten Schieberstellung, bei welcher die beiden Schieber im wesentlichen deckungsgleich zueinander stehen und eine maximale Spaltbreite bei einer ersten Spalthöhe definieren;
- Fig. 5: eine Schnittdarstellung einer erfindungsgemässen Schlitzblende einer vierten Ausführungsform, mit drei auf drei separaten parallelen Linien angeordneten Schiebern gemäss Fig. 3 in einer ersten Schieberstellung, bei welcher die beiden Schieber im wesentlichen deckungsgleich zueinander stehen und eine erste Spaltbreite bei einer maximalen Spalthöhe definieren;
- Fig. 6: einen Teilschnitt durch einen drei Schlitzblenden umfassenden Monochromator für ein System zum Messen der Fluoreszenz und/oder Lumineszenz und/oder Absorption von mit dem Licht aus einer Lichtquelle bestrahlten Proben;
- Fig. 7: ein Schema-Layout eines als Multifunktions-Reader gebauten Systems zum Messen der Fluoreszenz und/oder Lumineszenz und/oder Absorption von mit dem Licht aus einer Lichtquelle bestrahlten Proben mit einem Anregungs- und einem Emissions-Monochromator gemäss Fig. 6.

Figur 1 zeigt eine Frontansicht einer aus dem Stand der Technik bekannten, variablen Schlitzblende 6 mit zwei gemeinsam auf einer Line angeordneten Schiebern. Die Schlitzbreite 8 wird mittels einer Mikrometerschraube (senkrechter Pfeil) eingestellt, die gezielt einen elastischen Ring deformiert (wagrechter Doppelpfeil), an welchem zwei gegen einander gerichtete Keile symmetrisch in Bezug auf eine optische Achse 10 von einander entfernt (wie dargestellt) oder einander angenähert werden können.

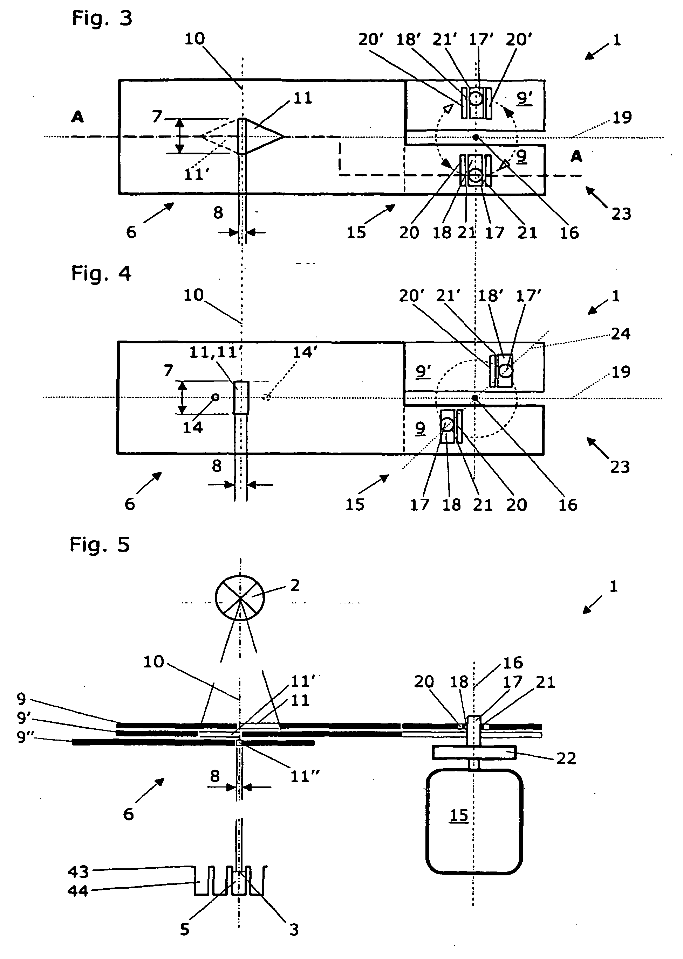

Figur 2 zeigt eine Frontansicht einer erfindungsgemässen Schlitzblende einer ersten Ausführungsform, mit zwei auf zwei separaten parallelen Linien angeordneten Schiebern zum Variieren der Spaltbreite oder der Spalthöhe. Gezeigt ist eine Vorrichtung 1 zum Begrenzen eines mit Licht aus einer Lichtquelle 2 (vgl. Fig. 5) beaufschlagten Feldes 3, insbesondere auf der Oberfläche eines optischen Elements 4 bzw. einer Probe 5. Optische Elemente 4 umfassen alle gebräuchlichen optischen Bauelemente, wie Gitter, Spiegel, Faseroptikkabel, Linsen und dergleichen. Proben 5 umfassen Fluide, wie Lösungen, Suspensionen und Flüssigkeits-Gasgemische sowie Festkörper, wie Emulsionen, Gewebeschnitte und Zellkulturen. Die Vorrichtung 1 umfasst eine Schlitzblende 6 mit einer Schlitzhöhe 7 und einer Schlitzbreite 8, wobei die Schlitzbreite 8 und/oder die Schlitzhöhe 7 stufenlos verstellbar sind. Die erfindungsgemässe Vorrichtung ist dadurch gekennzeichnet, dass die Schlitzblende 6 erste und zweite parallel zueinander auf zwei separaten parallelen Linien angeordnete, linear bewegliche Schieber 9,9' umfasst, welche in Bezug auf eine optische Achse 10 zumindest teilweise symmetrisch zueinander beweglich sind. Dabei umfasst jeder der beiden Schieber 9,9' zumindest eine optische Öffnung 11,11', die im Bereich der optischen Achse 10 zumindest teilweise auf der optischen Öffnung 11',11 des Nachbarschiebers 9',9 positionierbar ist.

Gemäss einer ersten Ausführungsform der Vorrichtung 1 weisen die optischen Öffnungen 11,11' in den beiden Schiebern 9,9' zur Erzeugung einer variablen Schlitzbreite 8 bei konstanter Schlitzhöhe 7 eine zu einander identische, rechteckige Form auf.

In einer ersten Schieberstellung 23 (vgl. Fig. 2A) stehen die beiden Schieber 9,9' im wesentlichen deckungsgleich zueinander und definieren eine maximale Spaltbreite 8 bei einer ersten Spalthöhe 7, welche gerade den Massen der optischen Öffnungen 11,11' entsprechen. Diese optischen Öffnungen 11,11' sind hier symmetrisch zu der optischen Achse 10 positioniert. Die Schieber 9,9' umfassen weitere optische Öffnungen 14,14', welche gegengleich in einem Abstand zu den optischen Öffnungen 11,11' angeordnet sind und vorzugsweise eine reduzierte Schlitzhöhe und eine bestimmte Schlitzbreite definieren. Alternativ zu der Darstellung in Fig. 2 können die weiteren optischen Öffnungen 14,14' auch einen runden Schlitz (vgl. Fig. 4) oder irgend eine geometrische Fläche definieren.

In der Bewegungsrichtung 19, welche als Symmetrieachse gezeichnet ist, sind diese Schieber 9,9' mittels einem Motorantrieb 15 (vgl. Fig. 5) beweglich. Die Drehachse 16 des Motorantriebs 15 zum Bewegen der beiden Schieber 9,9' steht rechtwinklig auf dieser als Symmetrieachse gezeichneten Bewegungsrichtung 19. Der Motorantrieb 15 umfasst zwei symmetrisch um die Drehachse 16 schwenkbare Bewegungszapfen 17,17', welche in je eine erste mechanische Öffnung 18,18' in den beiden Schiebern 9,9' eingreifen. Die beiden Schieber 9,9' weisen zweite mechanische Öffnungen 20,20' auf, die beabstandet entlang der ersten mechanischen Öffnungen 18,18' verlaufen, so dass zwischen den ersten und zweiten mechanischen Öffnungen 18,18';20,20' Federstege 21,21' zum spielfreien Halten der Bewegungszapfen 17,17' in den Schiebern 9,9' gebildet werden. Der Durchmesser der Bewegungszapfen 17,17' ist vorzugsweise geringfügig grösser als die Breite der ersten mechanischen Öffnungen 18,18', so dass die Federstege 20,20' beim Einsetzen der Bewegungszapfen 17,17' in die ersten mechanischen Öffnungen 18,18' elastisch ausweichen müssen. Dadurch wird ein spielfreier Halt der Bewegungszapfen 17,17' in den ersten mechanischen Öffnungen 18,18' gewährleistet.

Der Motorantrieb 15 umfasst vorzugsweise einen Schrittmotor mit einem Untersetzungsgetriebe (nicht gezeigt) sowie eine Drehscheibe 22, auf der die in die ersten mechanischen Öffnungen 18,18' der Schieber 9,9' eingreifenden Bewegungszapfen 17,17' so angeordnet sind, dass sie in einer ersten Schieberstellung 23 auf einer Linie 24 liegen, die sich durch die Drehachse 16 erstreckt und die unter einem Winkel von 90° zur Bewegungsrichtung 19 der Schieber 9,9' (vgl. Fig. 2 und 3) oder davon abweichend (vgl. Fig. 4) verläuft.

In einer zweiten Schieberstellung (vgl. Fig. 2B) sind die beiden Schieber 9,9' etwas gegen einander verschoben, so dass eine mittlere Spaltbreite 8 bei einer gleichbleibenden, ersten Spalthöhe 7 resultiert. Diese Schieberstellung wird durch eine leichte Drehung der Drehscheibe 22 mit dem Motor 15 erreicht. In einer dritten Schieberstellung (vgl. Fig. 2C) sind die beiden Schieber 9,9' mehr gegen einander verschoben, so dass eine minimale Spaltbreite 8 bei einer ersten, immer noch gleichen Spalthöhe resultiert.

In einer vierten Schieberstellung (vgl. Fig. 2D) sind die beiden Schieber 9,9' weiter gegen einander verschoben, so dass nun die beiden weiteren optischen Öffnungen 14,14', welche gegengleich in einem Abstand zu den optischen Öffnungen 11,11' angeordnet sind, genau übereinander stehen und eine feste Spaltbreite mit einer zweiten, reduzierten Spalthöhe resultiert. Durch ein geringfügiges Weiter- oder Zurückbewegen der Schieber 9,9' könnte auch die Spaltbreite dieses Spalts mit der zweiten, reduzierten Spalthöhe variiert werden.

Es ist einleuchtend, dass sich die Bewegungszapfen 17,17' mit fortschreitender Drehung der Drehscheibe 22 in den ersten mechanischen Öffnungen 18,18' der Schieber 9,9' immer mehr gegen die als Symmetrieachse gezeichnete Bewegungsrichtung 19 zu bewegen. Um diese Bewegung zu ermöglichen, sind die ersten mechanischen Öffnungen 18,18' in den beiden Schiebern 9,9' länglich und jeweils rechtwinklig zur Bewegungsrichtung 19 der Schieber 9,9' angeordnet.

Figur 3 zeigt eine Frontansicht einer erfindungsgemässen Schlitzblende einer zweiten Ausführungsform, mit zwei auf zwei separaten parallelen Linien angeordneten Schiebern zum Variieren der Spaltbreite und/oder Spalthöhe in einer ersten Schieberstellung, bei welcher die beiden Schieber im wesentlichen deckungsgleich zueinander stehen und eine bestimmte Spaltbreite und eine maximale Spalthöhe definieren. Die optischen Öffnungen 11,11' in den beiden Schiebern 9,9' weisen hier eine zu einander spiegelsymmetrische, fünfeckige Form auf. Durch eine geringfügige Drehung der Drehscheibe 22 mit dem Motorantrieb 15 im Gegenuhrzeigersinn (gefüllte Pfeilspitzen) um das Drehzentrum 16 werden die Schieber 9,9' so gegeneinander bewegt, dass die Schlitzhöhe 7 unverändert bleibt, die Schlitzbreite 8 aber (ähnlich wie in Fig. 2) reduziert wird. Durch Drehung der Drehscheibe 22 mit dem Motorantrieb 15 im Uhrzeigersinn (leere Pfeilspitzen) um das Drehzentrum 16 werden die Schieber 9,9' so gegeneinander bewegt, dass die Schlitzhöhe 7 reduziert wird und die Schlitzbreite 8 zunimmt. Wird diese Zunahme der Schlitzbreite 8 nicht gewünscht, kann - gemäss einer vierten Ausführungsform der erfindungsgemässen Schlitzblende - ein dritter, auf einer weiteren separaten, parallelen Linie angeordneter Schieber 9" mit einer eine feste Schlitzbreite 8 definierende, schmale optischen Öffnung 11" so symmetrisch zur optischen Achse positioniert werden (vgl. Fig. 5), dass mit zunehmender Bewegung der Drehscheibe 22 im Uhrzeigersinn die Schlitzhöhe 7 bei nun gleichbleibender Schlitzbreite variiert werden kann.

Figur 4 zeigt eine Frontansicht einer erfindungsgemässen Schlitzblende einer dritten Ausführungsform, bei der die auf der Drehscheibe 22 fixierten Bewegungszapfen 17,17', welche in die ersten mechanischen Öffnungen 18,18' der Schieber 9,9' eingreifen, so angeordnet sind, dass sie in einer ersten Schieberstellung 23 auf einer Linie 24 liegen, die sich durch die Drehachse 16 erstreckt und die unter einem Winkel von 45° zur Bewegungsrichtung 19 der Schieber 9,9' verläuft. Diese Anordnung hat den Vorteil, dass für eine vergleichbare Schieberbewegung eine grössere Bewegung der Drehscheibe 22 notwendig ist, dass also die Schieberbewegung noch exakter gesteuert werden kann.

Auch diese zwei auf zwei separaten parallelen Linien angeordneten Schieber eignen sich zum Variieren der Spaltbreite oder der Spalthöhe. Abweichend zu den anderen gezeigten Ausführungsformen weisen die beiden Schieber 9,9' zweite mechanische Öffnungen 20,20' auf, die nicht beidseitig entlang der ersten mechanischen Öffnungen 18,18' verlaufen, so dass zwischen den ersten und zweiten mechanischen Öffnungen 18,18';20,20' nur rechts oder links jeweils ein Federsteg 21,21' zum spielfreien Halten der Bewegungszapfen 17,17' in den Schiebern 9,9' gebildet wird.

Figur 5 zeigt eine Schnittdarstellung einer erfindungsgemässen Schlitzblende 6 der vierten Ausführungsform. Der entsprechende Schnittverlauf ist in Figur 3 mit A - - A gekennzeichnet. Drei auf drei separaten parallelen Linien angeordnete Schieber 9,9',9" befinden sich in einer ersten Schieberstellung, bei welcher die beiden Schieber 9,9' im wesentlichen deckungsgleich zueinander stehen und eine erste Spaltbreite 8 bei einer maximalen Spalthöhe definieren. Diese Spaltbreite 8 kann durch eine Bewegen der Schieber 9,9' oder auch durch das Hinzufügen des Schiebers 9" bestimmt werden; dabei kann dieses Hinzufügen automatisch bzw. motorisch angetrieben erfolgen. Licht der Lichtquelle 2, die sich auf der optischen Achse 10 befindet durchdringt die Schlitzblende und beaufschlägt ein von dieser Schlitzblende 6 definiertes Feld 3, welches hier die Oberfläche einer Probe 5 ist, die sich in einem Well 44 einer Mikroplatte 43 befindet. Diese Probe wird vom Anregungslicht durchdrungen, so dass körperlich oder zumindest funktionell in der optischen Achse angeordneter Detektor (nicht gezeigt) das von der Probe ausgelöste und/oder reflektierte bzw. gestreute Licht detektieren kann.

In Figur 5 besonders gut zu sehen ist auch der Motorantrieb 15 zum Bewegen der beiden Schieber 9,9', welcher zwei symmetrisch um die Drehachse 16 schwenkbare Bewegungszapfen 17,17' umfasst. Der hier gezeigte Bewegungszapfen 27 greift in die erste mechanische Öffnung 18 im Schieber 9 ein. Diese erste mechanische Öffnungen 18 ist hier durch einen beidseitigen Federsteg 21 von den parallel laufenden zweiten mechanischen Öffnungen 20 getrennt. Der Bewegungszapfen 17 wird dadurch beidseitig federnd und spielfrei im Schieber 9 gehalten.

Vorzugsweise sind die Schieber 9,9',9" aus Federstahl, speziell bevorzugt aus dünnem Federstahl-Blech, ausgebildet und zumindest im Bereich der optischen Öffnungen 11,11',11"; 14,14' schwarz mattiert. Das Zuschneiden der Schieber und/oder das Ausbilder der Öffnungen 11,11',11";14,14';18,18';20,20' erfolgt vorzugsweise durch Ätzen oder Laserschneiden. Besonders bevorzugt und kostengünstig ist das baugleiche Herstellen der beiden Schieber 9,9', welche dann spiegelverkehrt zu einer Schlitzblende 6 zusammengebaut werden können.

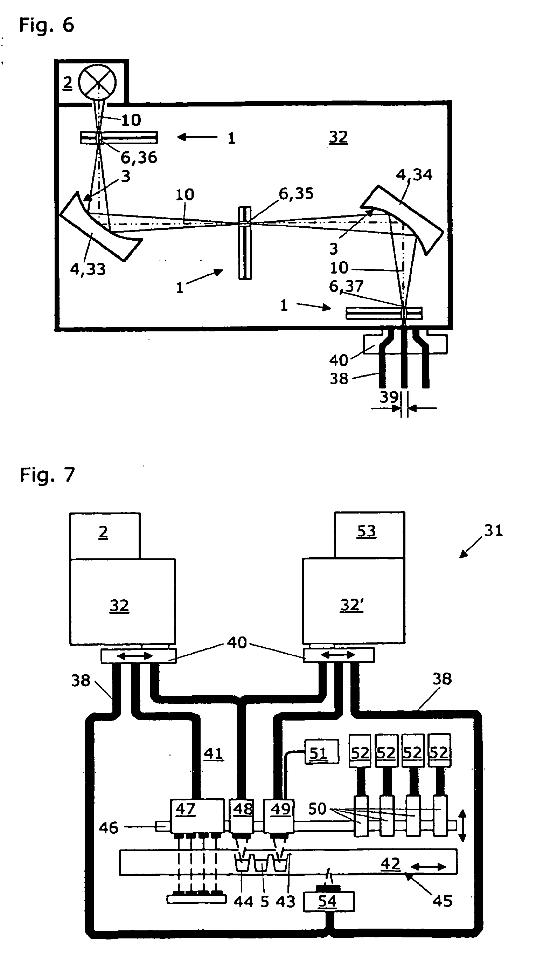

Figur 6 zeigt einen Teilschnitt durch einen drei Schlitzblenden 6 umfassenden Monochromator 32 für ein System 31 zum Messen der Fluoreszenz und/oder Lumineszenz und/oder Absorption von mit dem Licht aus einer Lichtquelle 2 bestrahlten Proben 5. Licht aus der Lichtquelle 2 tritt hier entlang der optischen Achse 10 durch die den sogenannten Eingangsspalt 36 definierende Schlitzblende 6 einer ersten Vorrichtung 1 und trifft auf ein Feld 3 eines optischen Elements 4 in Form eines ersten Gitters 33. Das Licht wird an diesem ersten Gitter 33 gespiegelt, tritt entlang der optischen Achse 10 durch die den sogenannten Mittelspalt 35 definierende Schlitzblende 6 einer zweiten Vorrichtung 1 und trifft auf ein Feld 3 eines optischen Elements 4 in Form eines zweiten Gitters 34. Das Licht wird an diesem zweitem Gitter 34 gespiegelt, tritt entlang der optischen Achse 10 durch die den sogenannten Ausgangsspalt 37 definierende Schlitzblende 6 einer dritten Vorrichtung 1 und trifft auf eine lichtleitende Faser bzw. ein lichtleitendes Faserbündel 38 mit einem bestimmten Durchmesser 39. Diese lichtleitende Faser bzw. dieses lichtleitende Faserbündel 38 leitet das nun monochromatische Licht zu einer Probe 5 (vgl. Fig. 7).

Bei einem additiven Doppel-Monochromator werden die Gitter so angeordnet dass sich die Dispersionen der beiden Gitter 33,34 addieren. Das vom ersten Monochromator erzeugte Spektrum wird vom 2. Monochromator noch weiter aufgespalten. Beim subtraktiven Monochromator werden die Gitter so angeordnet dass sich die Dispersionen der beiden 33,34 Gitter subtrahieren.

Für die Anwendung bedeutet dies, dass die Gesamtdispersion eines subtraktiven Monochromators durch die Dispersion des ersten Monochromators gegeben ist und damit nur halb so gross ist wie die eines additiven Monochromators. Der zweite Monchromator eines bevorzugten, subtraktiven Setups hat also lediglich den Zweck, die Streulichtunterdrückung zu verbessern. Bei einer gegebenen Spaltbreite 8 erzeugt daher ein subtraktiver Monochromator vorteilhafterweise Licht mit doppelter spektraler Bandbreite und damit mehr Energie. Als weiterer Vorteil eines subtraktiven Monochromators soll angeführt werden, dass es zur Einstellung der Bandbreite genügt, den Eintritts- und Mittelspalt des Monochromators zu bewegen; der Austrittspalt kann eine feste Breite besitzen, wodurch eine einfachere Mechanik verwendet werden kann.

Figur 7 zeigt ein Schema-Layout eines als Multifunktions-Reader gebauten Systems 31 zum Messen der Fluoreszenz und/oder Lumineszenz und/oder Absorption von mit dem Licht aus einer Lichtquelle 2 bestrahlten Proben 5 mit einem Anregungs-Monochromator 32 und einem Emissions-Monochromator 32', gemäss dem Bauprinzip in Fig. 6. Der linke Monochromator 32 ist wie der Sender (Blitzlampe 2 mit einstellbarer Wellenlänge und Bandbreite) der rechte Monochromator 32' fungiert als Detektor 53 mit einstellbarer Wellenlänge und Bandbreite. Lichtquelle, Proben 5 und Detektor 53 (Photomultiplier = PMT) sind über ein faseroptisches System 41 optisch miteinander verbunden, wobei die einzelnen Wege, d.h. lichtleitenden Fasern bzw. Faserbündel 38 mittels Faserschiebern 40 ausgewählt werden können.

Auf einem vertikal beweglichen (siehe Doppelpfeil) Optikhalter 46 sitzen in diesem beispielhaften System 31:
- Eine 1- bis 4-Kanal-Optik 47 für Absorptionsmessungen;
- "Top"-Optiken 48,49 zum Messen der Fluoreszenz-Intensität;
- "Top"-Optiken 50 zum Messen der Lumineszenz-Intensität;
- LED-Licht-Quelle;
- Photonenzählende Detektoren 52, die vorzugsweise als PMT ausgebildet sind.

Unterhalb der in X- und Y-Richtung in einer horizontalen Ebene 45 verschiebbaren Halterung 42 für Mikroplatten 43 befindet sich hier eine "Bottom"-Optik 54 zum Messen der Fluoreszenz-Intensität, die von den sich in den Wells 44 befindenden Proben 5 ausgeht.

Bei einer gegebenen Größe eines Wells 44 ist der Durchmesser 39 des das Well beleuchtenden Faserbündels bzw. der das Well beleuchtenden optischen Faser 38 prinzipiell nach oben beschränkt. Die Breite des Faserbündels auf der Monochromatorseite ist dann bei gegebener Spalthöhe 7 ebenfalls nach oben beschränkt. Damit ist auch die Spaltbreite 8 des Austrittsspaltes 37 und deshalb die erzielbare Bandbreite limitiert. Bei einem subtraktiven Monochromator erhält man nun bei gleicher Spaltbreite 8 die doppelte Bandbreite und kann deshalb bei gegebener Fasergeometrie (der Durchmesser wird wie oben erwähnt ja von der Wellgrösse definiert) doppelt soviel Energie in das zu messende Well einstrahlen.

Beliebige Kombinationen der offenbarten Merkmale gehören zum Umfang der vorliegenden Erfindung. Die Bezugszeichen weisen jeweils auf entsprechende Merkmale hin, auch wenn nicht in jedem Fall ausdrücklich darauf Bezug genommen wird.

## Patentansprüche

1. Monochromator (32) für ein System (31) zum Messen zumindest eines der Signale ausgewählt aus der Gruppe Fluoreszenz, Lumineszenz und Absorption von mit dem Licht aus einer Lichtquelle (2) bestrahlten Proben (5), umfassend :
- zumindest ein optisches Element (4);
- eine Lichtquelle (2);
- zumindest einen Eingangsspalt (36) oder Ausgangsspalt (37) für Licht aus der Lichtquelle (2) oder von einer Probe (5), wobei der Eingangsspalt (36) oder Ausgangsspalt (37) durch eine Schlitzblende (6) mit einer Schlitzhöhe (7) und einer Schlitzbreite (8) definiert ist;
- eine optische Achse (10), welche die Schlitzblende (6) durchdringt;
- zumindest eine Schlitzblende (6), die erste und zweite parallel zueinander auf zwei separaten parallelen Linien angeordnete, linear bewegliche Schieber (9,9') umfasst, welche in Bezug auf die optische Achse (10) zumindest teilweise symmetrisch zueinander beweglich sind, wobei jeder der beiden Schieber (9,9') zumindest eine optische Öffnung umfasst, die, zum stufenlosen Verstellen der Schlitzhöhe (7) und/oder der Schlitzbreite (8), im Bereich der optischen Achse (10) zumindest teilweise auf der optischen Öffnung des Nachbarschiebers (9,9') positionierbar ist; und
- zumindest einen Motorantrieb zum Bewegen der beiden Schieber (9,9') einer Schlitzblende (6) in einer Bewegungsrichtung (19),
**dadurch gekennzeichnet, dass** jede Schlitzblende (6) einen Motorantrieb mit einem eine Drehachse (16) aufweisenden Motor (15) umfasst, der zwei symmetrisch um die Drehachse (16) schwenkbare Bewegungszapfen (17,17') umfasst, welche in je eine erste mechanische Öffnung (18,18') in jedem der beiden Schieber (9,9') eingreifen, wobei diese Drehachse (16) des Motors rechtwinklig zu dieser Bewegungsrichtung (19) angeordnet ist und senkrecht zu den durch die Schleber (9,9') definierten Ebenen steht.

2. Monochromator (32) nach Anspruch 1, **dadurch gekennzeichnet, dass** der Motorantrieb eine Drehscheibe (22) umfasst, auf der die Bewegungszapfen (17, 17') angeordnet sind.

3. Monochromator (32) nach einem der Ansprüche 1 oder 2, **dadurch gekennzeichnet, dass** die optischen Elemente (4) des Monochromators (32) ein erstes und zweites Gitter (33,34) umfassen, zwischen denen eine Schlitzblende (6) zum Erzeugen eines Mittelspalts (35) angeordnet ist.

4. Monochromator (32) nach einem der vorhergehenden Ansprüche, **dadurch gekennzeichnet, dass** die optischen Öffnungen (11,11') in den beiden Schiebern (9,9') eine zu einander Identische oder spiegelsymmetrische Form aufweisen.

5. Monochromator (32) nach Anspruch 4, **dadurch gekennzeichnet, dass** die optischen Öffnungen (11,11') in den beiden Schiebern (9,9'), zur Erzeugung einer variablen Schlitzbreite (8) bei konstanter Schlitzhöhe (7), eine rechteckige Form aufweisen.

6. Monochromator (32) nach Anspruch 4, **dadurch gekennzeichnet, dass** die optischen Öffnungen (11,11') in den beiden Schiebern (9,9'), zur Erzeugung einer variablen Schlitzbreite (8) bei konstanter Schlitzhöhe (7) oder einer variablen Schlitzhöhe (7) bei variabler Schlitzbreite (8), eine fünfeckige Form aufweisen.

7. Monochromator (32) nach Anspruch 6, **dadurch gekennzeichnet, dass** ein dritter Schieber (9") parallel zu den beiden Schiebern (9,9') angeordnet ist und eine schmale optische Öffnung (11") umfasst, welche im Bereich der optischen Achse (10) zumindest teilweise auf den optischen Öffnungen (11,11') der beiden Schieber (9,9') und in sich symmetrisch zu dieser optischen Achse (10) positionierbar ist.

8. Monochromator (32) nach einem der Ansprüche 1 bis 3, **dadurch gekennzeichnet, dass** der erste Schieber (9), zur Erzeugung einer variablen Schlitzhöhe (7), eine optische Öffnung (11) umfasst, die eine fünfeckige Form aufweist, und dass ein zweiter Schieber (9') eine optische Öffnung (11') umfasst, die eine schmale rechteckige Form aufweist.

9. Monochromator (32) nach einem der vorhergehenden Ansprüche, **dadurch gekennzeichnet, dass** die beiden Schieber (9,9') weitere aufeinander positionierbare optische Öffnungen (14,14') umfassen, welche eine zu einander identische, rechteckige oder runde Form aufweisen.

10. Monochromator (32) nach Anspruch 1, **dadurch gekennzeichnet, dass** die ersten mechanischen Öffnungen (18,18') in den beiden Schiebern (9,9') länglich und jeweils rechtwinklig zur Bewegungsrichtung (19) der Schieber (9,9') angeordnet sind.

11. Monochromator (32) nach Anspruch 10, **dadurch gekennzeichnet, dass** die beiden Schieber (9,9') zweite mechanische Öffnungen (20,20') aufweisen, die beabstandet entlang der ersten mechanischen Öffnungen (18,18') verlaufen, so dass zwischen den ersten und zweiten mechanischen Öffnungen (18,18';20,20') Federstege (21,21') zum spielfreien Halten der Bewegungszapfen (17,17') in den Schiebern (9,9') gebildet werden.

12. Monochromator (32) nach einem der vorhergehenden Ansprüche, **dadurch gekennzeichnet, dass** die in die ersten mechanischen Öffnungen (18,18') der Schieber (9,9') eingreifenden Bewegungszapfen (17,17') so auf der Drehscheibe (22) angeordnet sind, dass sie in einer ersten Schieberstellung (23) auf einer Linie (24) liegen, die sich durch die Drehachse (16) erstreckt und die unter einem Winkel von 90° zur Bewegungsrichtung (19) der Schieber (9,9') oder davon abweichend verläuft.

13. Monochromator (32) nach einem der vorhergehenden Ansprüche, **dadurch gekennzeichnet, dass** die Drehachse der Drehscheibe (22) mit der Drehachse (16) des Motors (15) identisch ist.

14. Monochromator (32) nach einem der vorhergehenden Ansprüche, **dadurch gekennzeichnet, dass** die Schieber (9,9',9") aus Federstahl, insbesondere aus Federstahl-Blech, ausgebildet sind.

15. Monochromator (32) nach einem der vorhergehenden Ansprüche, **dadurch gekennzeichnet, dass** die Schieber (9,9',9") zumindest im Bereich der optischen Öffnungen (11,11',11";14,14') schwarz mattiert sind.

16. Monochromator (32) nach Anspruch 3, **dadurch gekennzeichnet, dass** die optischen Elemente (4) des Monochromators (32) eine dem ersten Gitter (33) vorgeschaltete Schlitzblende (6) zum Erzeugen eines Eingangsspalts (36) und eine dem zweiten Gitter (34) nachgeschaltete Schlitzblende (6) zum Erzeugen eines Ausgangsspalts (37) umfassen.

17. Monochromator (32) nach Anspruch 16, **dadurch gekennzeichnet, dass** an dem Ausgangsspalt (37) zumindest eine lichtleitende Faser (38) mit einem Durchmesser (39) anschliessbar ist.

18. System (31) zum Messen zumindest eines der Signale ausgewählt aus der Gruppe Fluoreszenz, Lumineszenz und Absorption von mit dem Licht aus einer Lichtquelle (2) bestrahlten Proben (5), **dadurch gekennzeichnet, dass** es zumindest einen Monochromator (32) gemäss einem der Ansprüche 1 bis 17 umfasst.

19. System (31) nach Anspruch 18, **dadurch gekennzeichnet, dass** es zwei Monochromatoren (32) umfasst, an deren Eingangs- bzw. Ausgangsspalten (36,37) je ein Faserschieber (40) angeordnet ist, mit welchem mindestens je zwei lichtleitende Fasern (38) eines faseroptischen Systems (41) anschliessbar sind.

20. System (31) nach Anspruch 18 oder 19, **dadurch gekennzeichnet, dass** es eine Halterung (42) zum Halten von Mikroplatten (43) umfasst, in deren Wells (44) Proben (5) anordenbar sind.

21. System (31) nach Anspruch 20, **dadurch gekennzeichnet, dass** die Halterung (42) mit einer oder mehreren Mikroplatten (43) in einer im Wesentlichen horizontalen Ebene (45) in einer X- und in einer dazu rechtwinklig verlaufenden Y-Richtung gezielt bewegbar ist.

22. System (31) nach einem der Ansprüche 18 bis 21, **dadurch gekennzeichnet, dass** es zumindest eine Optik (46) umfasst, die im Wesentlichen rechtwinklig zur Ebene (45) in Z-Richtung an im System (31) gehaltene Proben (5) annäherbar ausgebildet ist.

## Claims

1. Monochromator (32) for a system (31) for measuring at least one of the signals selected from the group fluorescence, luminescence and absorption from the specimens (5) irradiated with the light from a light source (2), comprising:
- at least one optical element (4)
- one light source (2);
- at least one entrance slit (36) or exit slit (37) for light from the light source (2) or from a specimen (5), with the entrance slit (36) or exit slit (37) defined by a slit diaphragm (6) with a slit height (7) and a slit width (8);
- one optical axis (10), which intersects the slit diaphragm (6);
- at least one slit diaphragm (6), which comprises first and second linearly mobile sliding elements (9,9') arranged parallel to each other on two separate parallel lines, which with respect to the optical axis (10) can be moved at least partially symmetrically to each other, with each of the two sliding elements (9,9') comprising at least one optical opening, which can be positioned at least partially on the optical opening of the neighboring sliding element (9,9') for the purpose of infinitely adjusting the slit height (7) and/or the slit width (8) in the area of the optical axis (10); and
- at least one motor drive for moving the two sliding elements (9,9') of a slit diaphragm (6) in a direction of movement (19),
**characterized in that** each slit diaphragm (6) comprises a motor drive with a motor (15) provided with an axis of rotation (16), with said motor comprising two moving pins (17,17') that can be rotated symmetrically about the axis of rotation (16), each of which engages in a first mechanical opening (18,18') in each of the two sliding elements (9,9'), with this axis of rotation (16) of the motor being arranged at a right angle to this direction of motion (19) and perpendicular to the planes defined by the sliding elements (9,9').

2. Monochromator (32) according to claim 1, **characterized in that** the motor drive comprises a rotary disk (22) on which the moving pins (17,17') are arranged.

3. Monochromator (32) according to one of the claims 1 or 2, **characterized in that** the optical elements (4) of the monochromator (32) comprise a first and second grating (33,34), with one slit diaphragm (6) arranged between them to generate a central slit (35).

4. Monochromator (32) according to any one of the previous claims, **characterized in that** the optical openings (11,11') in the two sliding elements (9,9') are identical to or are a symmetrical mirror image of each other.

5. Monochromator (32) according to claim 4, **characterized in that** the optical openings (11,11') in the two sliding elements (9,9') have a rectangular shape for generating a variable slit width (8) at a constant slit height (7).

6. Monochromator (32) according to claim 4, **characterized in that** the optical openings (11,11') in the two sliding elements (9,9') have a pentagonal shape for generating a variable slit width (8) at a constant slit height (7) or a variable slit height (7) at a variable slit width (8).

7. Monochromator (32) according to claim 6, **characterized in that** a third sliding element (9") is arranged parallel to the two sliding elements (9,9') and comprises a narrow optical opening (11"), which can be positioned at least partially on the optical openings (11,11') of the two sliding elements (9,9') and symmetrically in relation to this optical axis (10).

8. Monochromator (32) according to any one of claims 1 to 3, **characterized in that** the first sliding element (9) comprises an optical opening (11) of pentagonal shape for the purpose of generating a variable slit height (7), and **in that** a second sliding element (9') comprises an optical opening (11') with a narrow rectangular shape.

9. Monochromator (32) according to any one of the previous claims, **characterized in that** the two sliding elements (9,9') comprise further optical openings (14,14') that can be positioned upon each other and that are rectangular or round in shape or are identical to each other in shape.

10. Monochromator (32) according to claim 1, **characterized in that** the first mechanical openings (18,18') are arranged in the two sliding elements (9,9') longitudinally and at a right angle to the direction of movement (19) of the sliding elements (9,9') in each case.

11. Monochromator (32) according to claim 10, **characterized in that** the two sliding elements (9,9') are provided with second mechanical openings (20,20'), which are spaced along the first mechanical openings (18,18') such that resilient bars (21,21') are formed between the first and the second mechanical openings (18,18'; 20,20') to hold the moving pins (17,17') in the sliding elements (9,9') free of play.

12. Monochromator (32) according to any one of the previous claims, **characterized in that** the moving pins (17,17') engaging in the first mechanical openings (18,18') of the sliding elements (9,9') are arranged in a first sliding element position (23) on the rotary disk (22) such that they lie on one line (24) that extends through the axis of rotation (16) and that runs at an angle of 90° to the direction of movement (19) of the sliding elements (9,9') or deviates from this.

13. Monochromator (32) according to any one of the previous claims, **characterized in that** the axis of rotation of the rotary disk (22) is identical to the axis of rotation (16) of the motor (15).

14. Monochromator (32) according to any one of the previous claims, **characterized in that** the sliding elements (9,9',9") are developed from spring steel, particularly from sheet spring steel.

15. Monochromator (32) according to any one of the previous claims, **characterized in that** the sliding elements (9,9',9") have a black matte finish, at least in the region of the optical openings (11,11',11"; 14,14').

16. Monochromator (32) according to claim 3, **characterized in that** the optical elements (4) of the monochromator (32) comprise a slit diaphragm (6) located in front of the first grating (33) for creating an entrance slit (36) and a slit diaphragm (6) located after the second grating (34) for creating an exit slit (37).

17. Monochromator (32) according to claim 16, **characterized in that** at least one light-conducting fiber (38) with a diameter (39) can be connected to the exit slit (37).

18. System (31) for measuring at least one of the signals chosen from the group fluorescence, luminescence and absorption from specimens (5) irradiated with the light from one light source (2), **characterized in that** it comprises at least one monochromator (32) according to any one of the claims 1 to 17.

19. System (31) according to claim 18, **characterized in that** it comprises two monochromators (32), with a fiber slide (40) arranged at each of their entrance and exit slits (36,37), where at least two light-conducting fibers (38) of a fiber optic system (41) can be attached to said fiber slide.

20. System (31) according to claim 18 or 19, **characterized in that** it comprises a holding device (42) for holding microplates (43), in the wells (44) of which specimens (5) can be arranged.

21. System (31) according to claim 20, **characterized in that** the holding device (42) with one or a plurality of microplates (43) can be moved selectively in an essentially horizontal plane (45) along an X-axis and along a Y-axis extending at right angles to this.

22. System (31) according to any one of claims 18 to 21, **characterized in that** it comprises at least one optical system (46) that is developed such that specimens (5) held in the system (31) can be approached by said optical system essentially at a right angle to the plane (45) along a Z-axis.

## Revendications

1. Monochromateur (32) pour système (31) de mesure d'au moins un des signaux, sélectionnés dans le groupe de la fluorescence, de la luminescence et de l'absorption, d'échantillons (5) irradiés avec la lumière issue d'une source lumineuse (2), comportant :
- au moins un élément optique (4) ;
- une source lumineuse (2) ;
- au moins une fente d'entrée (36) ou une fente de sortie (37) pour la lumière issue de la source lumineuse (2) ou d'un échantillon (5), la fente d'entrée (36) ou la fente de sortie (37) étant définie par un diaphragme à fente (6) ayant une hauteur de fente (7) et une largeur de fente (8) ;
- un axe optique (10) qui traverse le diaphragme à fente (6) ;
- au moins un diaphragme à fente (6) qui comprend un premier et un second volet (9,9') linéairement mobiles et disposés parallèlement l'un à l'autre sur deux lignes parallèles séparées, lesquels sont mobiles l'un par rapport à l'autre de façon au moins partiellement symétrique par rapport à l'axe optique (10), chacun des deux volets (9,9') comportant au moins une ouverture optique qui peut être positionnée, pour un réglage continu de la hauteur de fente (7) et/ou de la largeur de fente (8), dans la zone de l'axe optique (10) au moins partiellement sur l'ouverture optique du volet voisin (9,9') ; et
- au moins un entraînement motorisé permettant de déplacer les deux volets (9,9') d'un diaphragme à fente (6) dans une direction de déplacement (19),
**caractérisé en ce que** chaque diaphragme à fente (6) comporte un entraînement motorisé avec un moteur (15) ayant un axe de rotation (16), qui comprend deux tourillons de déplacement (17,17') pouvant pivoter symétriquement autour de l'axe de rotation (16) et qui s'insèrent respectivement dans une première ouverture mécanique (18,18') de chacun des deux volets (9,9'), cet axe de rotation (16) du moteur étant disposé à angle droit par rapport au sens de déplacement (19) et reposant perpendiculairement au plan défini par les volets (9,9').

2. Monochromateur (32) selon la revendication 1, **caractérisé en ce que** l'entraînement motorisé comprend un plateau tournant (22) sur lequel sont disposés les tourillons de déplacement (17,17').

3. Monochromateur (32) selon l'une des revendications 1 ou 2, **caractérisé en ce que** les éléments optiques (4) du monochromateur (32) comprennent un premier et un second réseaux (33,34) entre lesquels est disposé un diaphragme à fente (6) permettant de générer une fente moyenne (35).

4. Monochromateur (32) selon l'une des revendications précédentes, **caractérisé en ce que** les ouvertures optiques (11,11') des deux volets (9,9') présentent une forme identique ou symétrique l'une à l'autre.

5. Monochromateur (32) selon la revendication 4, **caractérisé en ce que** les ouvertures optiques (11,11') des deux volets (9,9'), pour générer une largeur de fente (8) variable avec une hauteur de fente (7) constante, présentent une forme rectangulaire.

6. Monochromateur (32) selon la revendication 4, **caractérisé en ce que** les ouvertures optiques (11,11') des deux volets (9,9'), pour générer une largeur de fente (8) variable avec une hauteur de fente (7) constante ou une hauteur de fente (7) variable avec une largeur de fente (8) constante, présentent une forme de pentagone.

7. Monochromateur (32) selon la revendication 6, **caractérisé en ce qu'**un troisième volet (9") est disposé parallèlement aux deux volets (9,9') et présente une ouverture optique (11") étroite qui peut être positionnée dans la zone de l'axe optique (10) au moins partiellement sur les ouvertures optiques (11,11') des deux volets (9,9') et symétriquement par rapport à cet axe optique (10).

8. Monochromateur (32) selon l'une des revendications 1 à 3, **caractérisé en ce que** le premier volet (9), pour générer une hauteur de fente (7) variable, comporte une ouverture optique (11) qui présente une forme de pentagone, et **en ce qu'**un second volet (9') comporte une ouverture optique (11') qui présente une forme de rectangle étroit.

9. Monochromateur (32) selon l'une des revendications précédentes, **caractérisé en ce que** les deux volets (9,9') comportent d'autres ouvertures optiques (14,14') pouvant être positionnées les unes sur les autres et qui présentent une forme rectangulaire ou ronde, identique l'une à l'autre.

10. Monochromateur (32) selon la revendication 1, **caractérisé en ce que** les premières ouvertures mécaniques (18,18') des deux volets (9,9') sont disposées longitudinalement et respectivement perpendiculairement au sens de déplacement (19) des volets (9,9').

11. Monochromateur (32) selon la revendication 10, **caractérisé en ce que** les deux volets (9,9') présentent des secondes ouvertures mécaniques (20,20') qui s'étendent selon un écart le long des premières ouvertures mécaniques (18,18') si bien qu'entre les premières et les secondes ouvertures mécaniques (18,18';20,20') sont formées des barrettes à ressorts (21,21') permettant le maintien sans jeu des tourillons de déplacement (17,17') dans les volets (9,9').

12. Monochromateur (32) selon l'une des revendications précédentes, **caractérisé en ce que** les tourillons de déplacement (17,17') s'engrenant dans les premières ouvertures mécaniques (18,18') des volets (9,9') sont disposés sur le plateau tournant (22) de façon telle qu'ils reposent dans une première position de volet (23) sur une ligne (24) qui s'étend par l'axe de rotation (16) et qui s'étend en formant un angle de 90° par rapport au sens de déplacement (19) des volets (9,9') ou en s'en écartant.

13. Monochromateur (32) selon l'une des revendications précédentes, **caractérisé en ce que** l'axe de rotation du plateau tournant (22) est identique à l'axe de rotation (16) du moteur (15).

14. Monochromateur (32) selon l'une des revendications précédentes, **caractérisé en ce que** les volets (9,9',9") sont exécutés en acier à ressort, en particulier en tôle d'acier à ressorts.

15. Monochromateur (32) selon l'une des revendications précédentes, **caractérisé en ce que** les volets (9,9',9") sont dépolis en noir au moins dans la zone des ouvertures optiques (11,11',11";14,14').

16. Monochromateur (32) selon la revendication 3, **caractérisé en ce que** les éléments optiques (4) du monochromateur (32) comportent un diaphragme à fente (6) intercalé avant le premier réseau (33) pour générer une fente d'entrée (36) et un second diaphragme (6) intercalé après le second réseau (34) pour générer une fente de sortie (37).

17. Monochromateur (32) selon la revendication 16, **caractérisé en ce qu'**au niveau de la fente de sortie (37), on peut raccorder au moins une fibre optique (38) présentant un diamètre (39).

18. Système (31) de mesure d'au moins un des signaux, sélectionnés dans le groupe de la fluorescence, de la luminescence et de l'absorption, d'échantillons (5) irradiés avec la lumière issue d'une source lumineuse (2), **caractérisé en ce qu'**il comporte au moins un monochromateur (32) selon l'une des revendications 1 à 17.

19. Système (31) selon la revendication 18, **caractérisé en ce qu'**il comporte deux monochromateurs (32) au niveau des fentes d'entrée ou de sortie (36, 37) desquels est disposé respectivement un volet à fibres (40) avec lequel peuvent être reliées au moins deux fibres optiques (38) d'un système à fibres optiques (41).

20. Système (31) selon la revendication 18 ou 19, **caractérisé en ce qu'**il comprend une monture (42) permettant de maintenir des plaques de microtitration (43) dans les puits (44) desquelles sont disposés des échantillons (5).

21. Système (31) selon la revendication 20, **caractérisé en ce que** la monture (42) comportant une ou plusieurs des plaques de microtitration (43) est mobile de façon ciblée dans un plan essentiellement horizontal (45), dans une direction X et dans une direction Y qui lui est perpendiculaire.

22. Système (31) selon l'une des revendications 18 à 21, **caractérisé en ce qu'**il comprend au moins une optique (46) qui est exécutée pour s'approcher des échantillons (5) maintenus dans le système (31) essentiellement perpendiculairement au plan (45) dans la direction Z.
